# EUROPÄISCHE PATENTSCHRIFT

(11) **EP 0 976 941 B1**
(45) Veröffentlichungstag und Bekanntmachung des Hinweises auf die Patenterteilung: **24.01.2001**
(21) Anmeldenummer: 99110849.9
(22) Anmeldetag: 07.06.1999
(51) Int. Cl.: F16D 23/06

(54) **Synchronisiereinrichtung für ein Fahrzeuggetriebe**
Synchronizer for a vehicle transmission
Synchronisateur pour une transmission de véhicule

(30) Priorität: 31.07.1998 DE 19834544
(43) Veröffentlichungstag der Anmeldung: 02.02.2000
(73) Patentinhaber: Bayerische Motoren Werke Aktiengesellschaft, 80788 München (DE)
(72) Erfinder: Körber, Martin, 85375 Neufahrn (DE)

(56) Entgegenhaltungen:
- DE-A- 19 500 935
- DE-A- 19 545 519
- US-A- 5 269 400
- PATENT ABSTRACTS OF JAPAN vol. 018, no. 660 (M-1722), 14. Dezember 1994 (1994-12-14) & JP 06 257624 A (AISAN IND CO LTD), 16. September 1994 (1994-09-16)

## Beschreibung

Die Erfindung betrifft eine Synchronisiereinrichtung für ein Fahrzeuggetriebe nach dem Oberbegriff der Ansprüche 1 und 3. Derartige Synchroneinrichtungen sind z.B. aus DE-A-195 45 519 bzw. US-A-5 269 400 bekannt.

Es ist bereits bekannt, Getriebe mit einer Antriebswelle und einer Abtriebswelle und mit auf den Wellen angeordneten, einander zugeordneten Paarungen von Fest- und/oder Losteilen, wie Zahnräder, Synchronringe, Schiebemuffen, Kupplungslamellen und dergleichen, so zu gestalten, daß bei wenigstens einer der einander zugeordneten Paarungen von Fest- und/oder Losteilen, die Teile durch Magnetkraft voneinander abgestoßen werden. Ein solches Getriebe beschreibt das deutsche Gebrauchsmuster G 93 18 792.0.

Durch eine solche Ausführung werden auf einfache Weise die Klapper- und Rasselerscheinungen von Losteilen reduziert.

Durch abstoßende Magnetkräfte ist es aber nicht auf einfache Weise möglich, einen Kontakt zwischen Synchronring und Synchronkegel zuverlässig zu verhindern, wenn das Losrad nicht mit seiner zugehörigen Welle formschlüssig verbunden ist.

Der Synchronring einer Synchronisiereinrichtung hat einen bestimmten radialen und axialen Aufenthaltsbereich, in dem er sich frei bewegen kann. Prinzipbedingt ist es möglich, daß sich der Synchronring durch eine axiale Bewegung seinem Reibpartner, dem Synchronkegel, nähern kann. Auf diese Weise kann auch, ohne Einwirkung einer Axialkraft von außen, eine Reibkraft erzeugt werden. Durch diese Reibkraft wird ein Schleppmoment induziert, welches den Wirkungsgrad eines Handschaltgetriebes verschlechtert. Außerdem kann der Synchronring durch Prellvorgänge starke Geräusche erzeugen.

Dies gilt auch für Mehrfachkonus-Synchronisiereinrichtungen, bei denen zum Aufbau des Reibschlusses zwischen zwei zu synchronisierenden Bauteilen mehr als ein Synchronring benutzt wird.

Synchronisiereinrichtungen für Fahrzeuggetriebe sind desweiteren zur Vorsynchronisierung mit einem Kugel- Feder- Gleitstein-System oder mit einem Ringfeder - System ausgestattet. Zu Beginn eines Schaltvorgangs verhindert die Vorsynchronisierung eine axiale Bewegung der Schiebemuffe zum Eingriff in die Einspurverzahnung, indem der Synchronring aufgrund des Reibkontakts mit dem Synchronkegel in eine radiale Position zur Schiebemuffe gebracht wird, die diese durch Formschluß blockiert.

Aufgabe der Erfindung ist es, bei einer Synchronisiereinrichtung für ein Fahrzeuggetriebe, bei der eine Vorsynchronisierung über ein Kugel - Feder - Gleitstein-System oder ein Ringfeder - System erreicht wird, das Entstehen von Schleppmomenten und Geräuschen durch Bewegungen des Synchronrings zu vermeiden, wenn kein Synchronisiervorgang zwischen Losrad und Schiebemuffe stattfindet und diese nicht formschlüssig miteinander verbunden sind.

Die Aufgabe wird erfindungsgemäß mit dem kennzeichnenden Merkmal der Ansprüche 1 oder 3 gelöst. Weitere Ausgestaltungen der Erfindung ergeben sich aus dem Unteranspruch.

Nach der Erfindung wird bei einer Synchronisiereinrichtung für ein Fahrzeuggetriebe mit ständigem Zahneingriff, mit der durch Reibschluß über einen Synchronring zwei mit Differenzdrehzahl zueinander drehende Teile auf gleiche Drehzahl gebracht werden, wobei eine Vorsynchronisierung über ein Kugel- Feder- Gleitstein- System oder ein Ringfeder - System erreicht wird, mindestens ein Gleitstein oder die Ringfeder permanentmagnetisch ausgeführt.

Das hat den Vorteil, daß ein ferromagnetischer Synchronring, der nicht im Reibschluß mit dem zugehörigen Synchronkegel des Losrads steht, durch die magnetische Anziehungskraft des Gleitsteins oder der Ringfeder in einer Position fixiert wird, bei der es nicht zu einem spielbedingten Kontakt zwischen Synchronring und Synchronkegel kommen kann. Dadurch kann kein Schleppmoment mehr induziert werden und Prellvorgänge, die Geräusche erzeugen, werden verhindert.

Ein weiterer Vorteil ist, daß gattungsgemäße Synchronisiereinrichtungen zur Realisierung dieser Maßnahme konstruktiv nicht verändert werden müssen. Es ist dazu nur notwendig, mindestens einen nicht magnetischen Gleitstein oder die Ringfeder durch einen einbaugleichen permanentmagnetischen Gleitstein oder eine einbaugleiche permanentmagnetische Ringfeder zu ersetzen.

Werden alle Gleitsteine permanentmagnetisch ausgeführt, ist vorteilhafterweise gewährleistet, daß die Anziehungskraft gleichmäßig über den Umfang des Synchronrings verteilt ist.

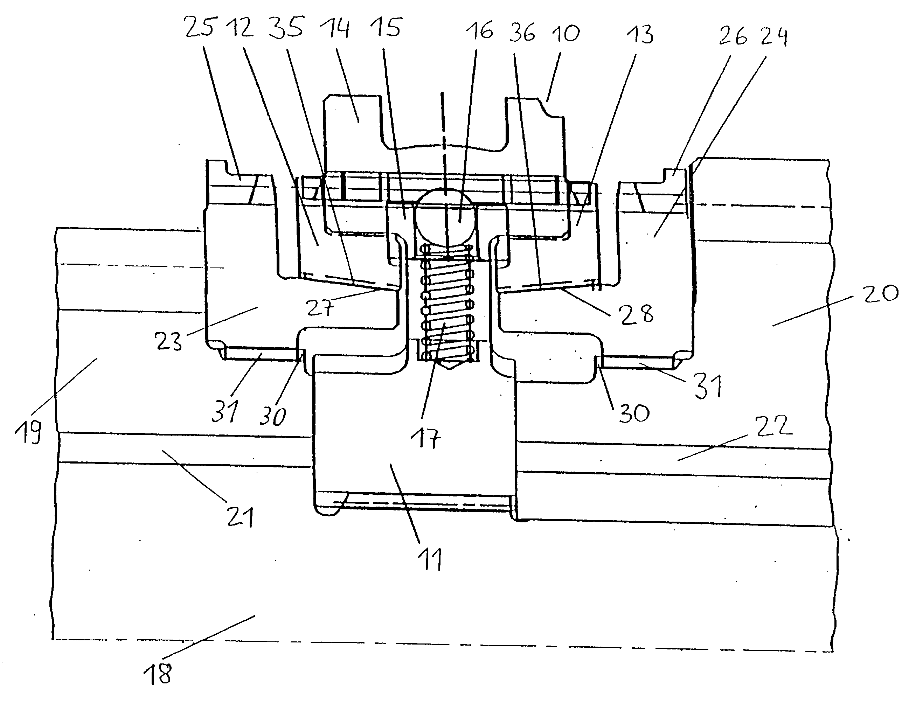

Ein bevorzugtes Ausführungsbeispiel der Erfindung ist in der nachfolgenden Beschreibung mit der zugehörigen Zeichnung dargestellt. Die einzige Figur zeigt eine Synchronisiereinrichtung für ein Fahrzeuggetriebe, in Neutralstellung, in einem Teilschnitt.

Die Figur zeigt in einem Teilschnitt eine an sich bekannte Synchronisiereinrichtung 10 eines herkömmlichen Kraftfahrzeuggetriebes mit ständigem Zahneingriff. Die an sich bekannte Synchronisiereinrichtung 10 besitzt einen Synchronkörper 11, Synchronringe 12 und 13, eine Schiebemuffe 14, Gleitsteine 15, Kugeln 16 und Federn 17 in vereinigtem Zustand.

Die Synchronisiereinrichtung 10 sitzt auf einer Welle 18 mit sich axial erstreckenden Keilnuten, neben denen auf entsprechenden, nicht gezeichneten, nur mit Bezugszahlen versehenen Lagern 21 und 22 Gangräder 19 und 20 drehbar sitzen, die während des Einsatzes des Getriebes durch nicht gezeichnete Festräder ständig mit unterschiedlichen Geschwindigkeiten angetrieben werden. Auf der Innenseite der Gangräder 19 und 20 sitzen Klauenräder 23 und 24, fest mit diesen verbunden über jeweils ein sich axial erstreckendes inneres Keilnutenprofil 31 der Klauenräder 23 und 24 für den Eingriff mit jeweils einem Keilnutenprofil 30 der Gangräder 19 und 20. Die Klauenräder 23 und 24 sind an ihrem Außenumfang mit sich axial erstrekkenden Klauen 25 und 26, sowie mit Synchronkegeln, ringförmigen Axialfortsätzen mit abgeschrägten Oberflächen 27 und 28 als Reibflächen, versehen.

Die Synchronisiereinrichtung 10 ist in neutraler Position dargestellt, das heißt, daß keines der Gangräder 19, 20 kraftschlüssig mit der Welle 18 verbunden ist. Um dieses zu erreichen, wird die Schiebemuffe 14 zu einem der Gangräder 19, 20 hin bewegt, wobei ein Unterschied in der Umlaufgeschwindigkeit zwischen dem betroffenen Gangrad 19 oder 20 und dem Synchronkörper 11 besteht. Aus diesem Grund wirkt beim Schalten eines der Gangräder 19 oder 20 eine Reibungsantriebskraft von dem jeweiligen Gangrad 19 oder 20 auf den zugehörigen Synchronring 12 oder 13 ein. Der jeweilige Synchronring 12 oder 13 wird dann durch das jeweilige Gangrad 19 oder 20 mitgenommen, weil zwischen der Oberfläche 27 oder 28 der Reibfläche des mit dem Gangrad 19 oder 20 verbundenen Klauenrads 23 oder 24 und einer konischen Bremsfläche 35 oder 36 des jeweiligen Synchronrings 12 oder 13 Berührung vorliegt.

Befindet sich die Synchronisiereinrichtung 10 in der gezeichneten Neutralstellung, so sind die Synchronringe 12, 13 zwischen den Klauenrädern 23 und 24 und dem Synchronkörper 11 mit axialem Spiel eingebaut. Deshalb ist es prinzipbedingt möglich, daß sich jeder der Synchronringe 12 oder 13 durch eine axiale Bewegung den Reibflächen 27 und 28 seiner Reibpartner nähern kann. Es kann so auch ohne Einwirkung einer Axialkraft von außen eine Reibkraft erzeugt werden. Durch diese Reibkraft wird ein Schleppmoment induziert, welchen den Wirkungsgrad des Handschaltgetriebes verschlechtert. Abhängig vom konstruktiven und funktionell bedingten Aufenthaltsbereich des jeweiligen Synchronrings 12 oder 13 kann dieser zusätzlich durch Prellvorgänge starke Geräusche erzeugen, welche die Akustik des Handschaltgetriebes verschlechtern

Aus diesem Grund sind die Gleitsteine 15 am Umfang des Synchronkörpers 11 permanent magnetisch ausgeführt. Sie üben deshalb eine Anziehungskraft auf die ferromagnetischen Synchronringe 12 und 13 aus, was bewirkt, daß diese zum Synchronkörper 11 hingezogen werden. Sie sind so in der Neutralstellung der Synchronisiereinrichtung 10 in einer Position fixiert, bei der es nicht zu einem spielbedingten Kontakt zwischen ihnen und den Reibflächen 27 und 28 kommen kann. Ein Schleppmoment und Geräusche treten so nicht mehr auf. Die Aktivierung der Synchronisierung ist dadurch nicht behindert. Weitere konstruktive Änderungen zur Realisierung dieser Maßnahme sind nicht notwendig, die magnetischen Gleitsteine 15 sind einbaugleich zu nichtmagnetischen, entsprechend dem Stand der Technik.

Bei einer Synchronisiereinrichtung für Fahrzeuggetriebe mit einer Vorsynchronisierung nach dem bekannten Ringfeder - System, wird, gleichwirkend wie in dem Ausführungsbeispiel mit Kugel - Feder - Gleitstein - System, anstatt des Austauschs des Gleitsteins durch den permanentmagnetischen Gleitstein 15, die Ringfeder durch eine permanentmagnetische Ringfeder ersetzt.

## Patentansprüche

1. Synchronisiereinrichtung (10) für ein Fahrzeuggetriebe mit ständigem Zahneingriff, mit der durch Reibschluß über einen Synchronring (12,13) zwei mit Differenzdrehzahl zueinander drehende Teile auf gleiche Drehzahl gebracht werden, wobei eine Vorsynchronisierung über ein Kugel (16) - Feder (17) - Gleitstein (15) - System erreicht wird, dadurch gekennzeichnet, daß mindestens ein Gleitstein (15) permanentmagnetisch ausgeführt ist.

2. Synchronisiereinrichtung (10) nach Anspruch 1, dadurch gekennzeichnet, daß alle Gleitsteine (15) permanentmagnetisch ausgeführt sind.

3. Synchronisiereinrichtung (10) für ein Fahrzeuggetriebe mit ständigem Zahneingriff, mit der durch Reibschluß über einen Synchronring (12,13) zwei mit Differenzdrehzahl zueinander drehende Teile auf gleiche Drehzahl gebracht werden, wobei eine Vorsynchronisierung über ein Ringfeder - System erreicht wird, dadurch gekennzeichnet, daß eine Ringfeder permanentmagnetisch ausgeführt ist.

## Claims

1. A synchronising device (10) for a vehicle gear unit with constant tooth engagement, by means of which two parts rotating at different speeds are brought to the same speed by frictional engagement via a synchronising ring (12, 13), pre-synchronisation being obtained by a ball (16), spring (17) and sliding ring (15) system, characterised in that at least one sliding ring (15) is permanently magnetised.

2. A synchronising device (10) according to claim 1, characterised in that all the sliding rings (15) are permanently magnetised.

3. A synchronising device (10) for a vehicle gear unit with constant tooth engagement, by means of which two parts rotating at different speeds are brought to the same speed by frictional engagement via a synchronising ring (12, 13), pre-synchronisation being obtained by a ball, spring and sliding ring system, characterised in that an annular spring is permanently magnetised.

## Revendications

1. Synchronisateur (10) pour une boîte de vitesses de véhicule à engrènement permanent, qui par un verrouillage à friction produit par une bague de synchronisation (12, 13) amène à la même vitesse deux pièces tournant l'une par rapport à l'autre, à des vitesses différentes, une présynchronisation étant assurée par un système à billes (16), ressorts (17) et coulisseaux (15),
caractérisé en ce qu'
au moins un coulisseau (15) présente une magnétisation permanente.

2. Synchronisateur (10) selon la revendication 1,
caractérisé en ce que
tous les coulisseaux (15) présentent une magnétisation permanente.

3. Synchronisateur (10) pour une boîte de vitesses de véhicule avec engrènement permanent, qui par un verrouillage à friction produit par une bague de synchronisation (12, 13) amène à la même vitesse deux pièces tournant l'une par rapport à l'autre, une présynchronisation étant assurée par un système à ressorts annulaires,
caractérisé en ce qu'
un ressort annulaire présente une magnétisation permanente.
